# EUROPÄISCHE PATENTANMELDUNG

(11) **EP 0 624 620 A2**
(43) Veröffentlichungstag der Anmeldung: **17.11.1994**
(21) Anmeldenummer: 94106960.1
(22) Anmeldetag: 04.05.1994
(51) Int. Cl.: C08J 11/06, D01F 6/46, D04H 1/64

(54) **Verfahren zur Herstellung von Propylen als Hauptbestandteil enthaltenden Fasern**

(30) Priorität: 12.05.1993 DE 4315875
(71) Anmelder: BASF Aktiengesellschaft, D-67063 Ludwigshafen (DE)
(72) Erfinder: Butterfass, Dieter, D-67459 Boehl-Iggelheim (DE); Schuhmacher, Hans-Joachim, D-67435 Neustadt (DE); Mueller, Michael Wolfgang, Dr., D-68723 Plankstadt (DE)

(57) **Zusammenfassung**

Ein Verfahren zur Herstellung von Polypropylen als Hauptbestandteil enthaltenden Fasern nach der Schmelzspinnmethode, bei dem man einen gebundenen Vliesstoff aufschmilzt und die Schmelze wieder zu Fasern verspinnt.

## Beschreibung

Die vorliegende Erfindung betrifft ein Verfahren zur Herstellung von Polypropylen als Hauptbestandteil enthaltenden Fasern nach der Schmelzspinnmethode.

Die Anwendung des Schmelzspinnverfahrens zur Herstellung von Polypropylenfasern ist allgemein bekannt (z.B. Ullmann's Encyclopedia of Industrial Chemistry, VCH Verlagsgesellschaft, 5. Auflage, 1987, Vol. A10, S. 615 bis 623).

Unter anderem eignen sich Polypropylenfasern zur Herstellung von Vliesstoffen, die durch das Verfestigen von Faservliesen erhältlich sind. Neben der mechanischen und thermischen Vliesverfestigung ist insbesondere die Verfestigung von Faservliesen mit Bindemitteln von Bedeutung. Mit Bindemitteln verfestigte Faservliese finden vor allem zur Automobilausstattung Verwendung, insbesondere in Gestalt von Bodenbelägen. Letztere finden auch im nicht industriellen Bereich Verwendung. Zusätzlich zur chemischen Verfestigung sind derartige Vliesstoffe in der Regel mechanisch verfestigt, z.B. durch Nadeln.

Aus Nonwovens Industry 14 (12), 1983, S. 12 bis 24, ist bekannt, daß wäßrige Polymerisatdispersionen von aus überwiegend olefinischen Monomeren sowie untergeordneten Mengen an α,β-monoethylenisch ungesättigten Carbonsäuren in polymerisierter Form aufgebauten Polymerisaten als Bindemittel zur Herstellung von Vliesstoffen auf der Basis von Polypropylenfasern geeignet sind.

Aus den Deutschen Gebrauchsmustern 9210376, 9210375 und 9210377 sind Verfahren zur Wiederverwertung von Produkten auf der Basis von Polyolefinen bekannt. Diese Verfahren vermögen jedoch zur Wiederverwertung von Vliesstoffen auf der Basis von Polypropylenfasern und wäßrigen Polymerisatdispersionen von überwiegend aus olefinischen Monomeren aufgebauten Polymerisaten als Bindemittel nicht zu befriedigen.

Die Aufgabe der vorliegenden Erfindung bestand daher darin, ein vorteilhafteres Verfahren zur Wiederverwertung von Vliesstoffen auf der Basis von Polypropylenfasern und wäßrigen Polymerisatdispersionen von überwiegend aus olefinischen Monomeren aufgebauten Polymerisaten als Bindemittel zur Verfügung zu stellen.

Demgemäß wurde ein Verfahren zur Herstellung von Polypropylen als Hauptbestandteil enthaltenden Fasern nach der Schmelzspinnmethode gefunden, das dadurch gekennzeichnet ist, daß man einen Vliesstoff, im wesentlichen bestehend aus
a) Fasern, die zu wenigstens 80 Gew.-% aus solchen Polymeren bestehen, die zu wenigstens 95 Gew.-% aus Propylen in polymerisierter Form aufgebaut sind und
b) 5 bis 60 Gew.-%, bezogen auf die Fasern a), an einem polymeren Bindemittel, das zu wenigstens 70 Gew.-% aus einem C₂- bis C₄-Olefin in polymerisierter Form aufgebaut ist,
aufschmilzt und die Schmelze zu Fasern verspinnt.

Überraschenderweise eignen sich solchermaßen hergestellte Fasern in befriedigender Weise zur Neuherstellung von Vliesstoffen.

Vorzugsweise bestehen die Fasern a) zu wenigstens 90, besonders bevorzugt zu wenigstens 95 Gew.-%, aus solchen Polymeren, die zu wenigstens 95 Gew.-%, vorzugsweise zu 100 Gew.-%, aus Propylen in polymerisierter Form aufgebaut sind. Andere mögliche Bestandteile der Fasern a) sind z.B. Polymere, die als Hauptmonomere Ethylen einpolymerisiert enthalten, insbesondere Polyethylen oder Copolymere aus Ethylen und Propylen. Ferner enthalten die Fasern a) in der Regel Additive wie Antioxidationsmittel oder Licht-Stabilisatoren. Häufig werden auch gefärbte Fasern a) verwendet. In diesem Fall enthalten die Fasern a) geeignete farbige Pigmente eingearbeitet. Zweckmäßigerweise werden die Pigmente in die Ausgangsschmelze der Fasern eingearbeitet.

Die Einsatzmenge des polymeren Bindemittels b) beträgt, bezogen auf die Fasern a), vorzugsweise 10 bis 40, besonders bevorzugt 10 bis 20 Gew.-%.

Das polymere Bindemittel b) kann dem Faservlies z.B. als niederschmelzendes Pulver oder in Form niederschmelzender Fasern zugesetzt werden. Die verfestigende Wirkung wird in diesem Fall durch kurzzeitiges Erwärmen des Gemisches über die Schmelztemperatur des Bindemittels b) und nachfolgendes Abkühlen erzielt. Die bevorzugte Applikationsform des Bindemittels b) ist jedoch seine wäßrige Polymerisatdispersion. Entsprechende wäßrige Polymerisatdispersionen und ihre Herstellung sind bekannt, wobei diejenigen wäßrigen Polymerisatdispersionen bevorzugt werden, deren Polymerisate zur Dispergierung im wäßrigen Medium keiner äußeren Dispergiermittel bedürfen, d.h. die selbstemulgierend sind. Solche wäßrigen Polymerisatdispersionen und ihre Herstellung sind z.B. in der EP-A 24034, der DE-A 34 20 168 sowie der US-A 4 613 679 beschrieben.

Besonders bevorzugte wäßrige Polymerisatdispersionen von Bindemitteln b) sind wäßrige Polymerisatdispersionen selbstemulgierender Polymerisate, deren Polymerisate zum Zwecke der Selbstemulgierung in wirksamen Mengen saure Gruppen, insbesondere Carboxylgruppen aufweisen. Mit besonderem Vorteil sind die selbstemulgierenden Polymerisate in polymerisierter Form aus
70 bis 90 Gew.-% wenigstens eines C₂- bis C₄-Olefins (vorzugsweise C₂- oder C₃-Olefins) und
10 bis 30 Gew.-% wenigstens einer 3 bis 8 C-Atome enthaltenden α,β-monoethylenisch ungesättigten Mono- und/oder Dicarbonsäure und/oder deren Anhydrid
aufgebaut. Darunter sind wiederum jene wäßrigen Polymerisatdispersionen bevorzugt, bei denen die carbonsauren Comonomeren 3 bis 5 C-Atome enthalten. Besonders bevorzugte carbonsaure Comonomere sind Acrylsäure und Maleinsäure oder deren Anhydrid. Selbstverständlich können die sauren Funktionen teilweise oder vollständig neutralisiert vorliegen. Geeignete Neutralisationsmittel sind Alkalimetallhydroxide, Amine, die auch Hydroxylgruppen tragen können, und insbesondere Ammoniak.

Ganz besonders empfehlenswerte selbstemulgierende Polymerisate b) sind in polymerisierter Form aus
70 bis 90 Gew.-% Ethylen und
10 bis 30 Gew.-% Acrylsäure
aufgebaut. Unter diesen sind wiederum solche von Vorteil, wie sie aus Nonwovens Industry, 14 (12), 1983, S. 16, Figure 1, sowie aus der Technischen Information "Bodenbeläge und Schäume, Epotal® DS 4024 X, März 1993" der BASF AG bekannt sind, wobei es sich bei Epotal DS 4024 X um eine ganz besonders vorteilhafte wäßrige Dispersion eines Polymerisats b) handelt. In der Regel beträgt das relative gewichtsmittlere Molekulargewicht dieser Polymerisate b) etwa 15.000 bis 25.000 und ihre bei 200°C mit einem Meßgerät MC 10 der Firma Physica in nachfolgender Couette-Anordnung
- Innenzylinder:: Radius = 7 mm; Länge = 21 mm
- Außenzylinder:: Radius = 7,6 mm (→Scherspalt 0,6 mm)
bei 10 Umdrehungen pro Sekunde ermittelte Schmelzviskosität liegt im Bereich von 10 bis 150 Pa·s.

Das Applizieren der wäßrigen Dispersion des Bindemittels b), deren Feststoffgehalt üblicherweise 20 bis 30 Gew.-% beträgt, auf das Faservlies kann durch Vollimprägnierung, Aufsprühen, Schaumauftrag, Pflatschen, Rakeln oder Drucken erfolgen. Die beim Trocknen einhergehende Verfilmung der Polymerisatdispersion bewirkt die Verfestigung des Faservlies.

Zur Wiederverwertung wird das gebundene Faservlies in einfacher Weise aufgeschmolzen und in an sich bekannter Weise zu neuen Fasern versponnen. Zweckmäßigerweise erfolgt das Aufschmelzen so, daß man das gebundene Faservlies zunächst mechanisch zerkleinert, durch Wärmeeinwirkung verdichtet, in einem Extruder aufschmilzt, extrudiert und durch Spinndüsen drückt. Selbstverständlich können der Schmelze vor dem Verspinnen die üblichen Additive wie z.B. färbende Pigmente zugesetzt werden.

Die so erhältichen Fasern, deren Schnittlänge in der Regel 40 bis 120 mm und deren Feinheit normalerweise 10 bis 70 dtex beträgt, eignen sich in voll befriedigender Weise zur Wiederherstellung von Vliesstoffen. Im Fall von chemisch gebundenen Vliesstoffen unterliegt das dabei zu verwendende Bindemittel im wesentlichen keinen Einschränkungen. Vorzugsweise wird ein Bindemittel b) verwendet.

Das erfindungsgemäße Verfahren zur Wiederverwertung von Vliesstoffen auf der Basis von Polypropylenfasern ist gegenüber solchen Wiederverwertungsverfahren, deren Zielsetzung darin liegt, das polymere Bindemittel aus dem Vliesstoff herauszulösen und das dabei resultierende Faservlies weiterzuverwerten, insofern von Vorteil, als die Entsorgung einer Bindemittellösung entfällt.

Wird zur Wiederherstellung eines Vliesstoffes stets ein Bindemittel b) eingesetzt, kann das erfindungsgemäße Verfahren selbstverständlich mehrfach aufeinanderfolgend angewendet werden.

Führt das Durchlaufen mehrerer solcher Zyklen zu einer Abnahme des Schmelzpunktes der rezyklisierten Fasern, so eignen sich diese gegebenenfalls als Schmelzbinder für neue Polypropylenfasern.

Selbstverständlich erstreckt sich das erfindungsgemäße Verfahren auch auf solche Vliesstoffe, die als weiteres Strukturelement eine rückseitig aufgebrachte Polyolefinfolie oder ein rückseitig aufgebrachtes Polyolefin in Pulverform, in beiden Fällen insbesondere aus Polypropylen, aufweisen.

### Beispiel (die Faserfeinheit wird als die auf die Faserlänge bezogene Fasermasse in der Einheit tex wiedergegeben; 1 tex = 1 g·10⁻³m⁻¹)

a) Gemäß DIN 53 834 wurden von handelsüblichen Polypropylenstapelfasern (Schnittlänge: 80 mm) unterschiedlicher Feinheit die feinheitsbezogene Höchstzugkraft (cN/tex) sowie die Höchstzugkraftdehnung (%, bezogen auf die Ursprungslänge) ermittelt. Die Ergebnisse zeigt die Tabelle 1.

**Tabelle 1**

| Feinheit [dtex] | HZK (cN/tex) | HZKD (%) |
|---|---|---|
| 20,0 | 32,0 | 128,7 |
| 15,5 | 35,0 | 117,1 |

b) Aus den Stapelfasern a) bestehende genadelte Faservliese (Gewicht: 700 g/m²) wurden im Zwickel eines Walzenfoulard mit Epotal DS 4024 X (25 gew.-%ige wäßrige Polymerisatdisperion eines aus 80 Gew.-% Ethylen und 20 Gew.-% Acrylsäure in polymerisierter Form aufgebauten Copolymerisats) imprägniert und getrocknet (Trocknungstemperatur: 125°C). Der Bindemittelgehalt der resultierenden Vliesstoffe betrug, bezogen auf das Gewicht der Ausgangsfasern, 30 Gew.-%.
Die resultierenden Vliesstoffe wurden mechanisch zerkleinert, durch Wärmeeinwirkung verdichtet, in einem Extruder aufgeschmolzen, extrudiert und durch Spinndüsen gedrückt. Die Dimensionen wurden so gewählt, daß Stapelfasern der Feinheit 20,2 und 15,2 dtex sowie der Schnittlänge 80 mm erhalten wurden.
Die mechanischen Eigenschaften dieser rezyklisierten Stapelfasern wurden wie in a) ermittelt. Die Ergebnisse zeigt Tabelle 2.

**Tabelle 2**

| Feinheit [dtex] | HZK (cN/tex) | HZKD (%) |
|---|---|---|
| 20,2 | 26,2 | 128 |
| 15,5 | 32,8 | 127 |

c) Mit den rezyklisierten Stapelfasern aus b) wurden wie in b) Vliesstoffe hergestellt. Die Qualität der hier resultierenden Vliesstoffe war von jener der in b) resultierenden Vliesstoffe im wesentlichen nicht unterscheidbar.
Als im wesentlichen ebenfalls ununterscheidbar erwiesen sich auch die Qualitäten von mit den Vliesstoffen aus b) bzw. c) angefertigten Bodenbelägen.

## Patentansprüche

1. Verfahren zur Herstellung von Fasern nach der Schmelzspinnmethode, dadurch gekennzeichnet, daß man einen Vliesstoff, im wesentlichen bestehend aus
a) Fasern, die zu wenigstens 80 Gew.-% aus solchen Polymeren bestehen, die zu wenigstens 95 Gew.-% aus Propylen in polymerisierter Form aufgebaut sind und
b) 5 bis 60 Gew.-%, bezogen auf die Fasern a), an einem polymeren Bindemittel, das zu wenigstens 70 Gew.-% aus einem C₂- bis C₄-Olefin in polymerisierter Form aufgebaut ist,
aufschmilzt und die Schmelze zu Fasern verspinnt.

2. Fasern, die nach einem Verfahren gemäß Anspruch 1 erhalten worden sind.

3. Faservlies, enthaltend Fasern gemäß Anspruch 2.

4. Vliesstoff, enthaltend Fasern gemäß Anspruch 2.

5. Verwendung von gemäß Anspruch 1 hergestellten Fasern zur Erzeugung eines Faservlies oder eines Vliesstoff.

6. Verwendung von Fasern gemäß Anspruch 2, zur Herstellung von Bodenbelägen.

7. Bodenbelag, enthaltend Fasern gemäß Anspruch 2.
